# EUROPÄISCHE PATENTSCHRIFT

(11) **EP 1 940 668 B1**
(45) Veröffentlichungstag und Bekanntmachung des Hinweises auf die Patenterteilung: **01.05.2013**
(21) Anmeldenummer: 06807460.8
(22) Anmeldetag: 23.10.2006
(51) Int. Cl.: B61L 23/00, B61L 3/00, G01P 5/16

(54) **VERFAHREN ZUM ERFASSEN UND BERÜCKSICHTIGEN VON SEITENWINDBELASTUNGEN BEI EINEM IN FAHRT BEFINDLICHEN SCHIENENFAHRZEUG UND DESSEN ENTSPRECHEND AUSGEFÜHRTER ENDWAGEN**
METHOD FOR THE DETECTION AND CONSIDERATION OF CROSSWIND LOADS IN A TRAVELING RAILWAY VEHICLE, AND THE ACCORDINGLY CONFIGURED LAST CAR THEREOF
PROCEDE DE DETECTION ET DE PRISE EN COMPTE DE L'ACTION D'UN VENT LATERAL SUR UN VEHICULE SUR RAILS EN MOUVEMENT ET WAGON TERMINAL CONÇU EN CONSEQUENCE

(30) Priorität: 25.10.2005 DE 102005051077
(43) Veröffentlichungstag der Anmeldung: 09.07.2008
(73) Patentinhaber: Siemens Aktiengesellschaft, 80333 München (DE)
(72) Erfinder: ARRAS, Burkhard, 47802 Krefeld (DE)
(86) Internationale Anmeldenummer: PCT/EP2006/067650
(87) Internationale Veröffentlichungsnummer: WO 2007/048765

(56) Entgegenhaltungen:
- DE-A1- 4 305 513
- HANS PETER LANG: "Der technische Systemverbund Bahn - Ein Gebot der Wirtschaftlichkeit"[Online] 19. September 2005 (2005-09-19), Seiten 1-24, XP002414916 Graz Gefunden im Internet: URL:http://www.schienenfahrzeugtagung.at/d ownload/PDV%20Versionen/06%20-%20Vortrag%2 0Graz%2019_09_2005%20(Hans%20Peter%20Lang) .pdff> [gefunden am 2005-09-19]
- "Seitenwindgefahr für schnelle Reisezüge?" EI-EISEENBAHNINGENIEUR, [Online] Oktober 2002 (2002-10), Seite 24, XP002414917 Gefunden im Internet: URL:http://www.eurailpress.com/archiv/show pdf.php?datei=/erparchiv/ei2002/10seitenwi ndproblem.pdf> [gefunden am 2002-10]
- OTTO GÜNTHER: "Technische Abnahmekriterien für Eisenbahnfahrzeuge der deutschen Eisenbahnen gemä? 332, Abs.1, EBO" EIK, [Online] 26. April 2001 (2001-04-26), Seiten 1-9, XP002414918 Bonn Gefunden im Internet: URL:http://www.eurailpress.com/archiv/show pdf.php?datei=/erparchiv/eik2002/guenther. pdf> [gefunden am 2001-04-26]

## Beschreibung

Die Erfindung bezieht sich auf ein Verfahren zum Erfassen und Berücksichtigen von Seitenwindbelastungen bei einem in Fahrt befindlichen Schienenfahrzeug, insbesondere einem solchen, das sich mit vergleichsweise hoher Fahrgeschwindigkeit von beispielsweise 200 bis 400 km/h fortbewegt. Die Erfindung bezieht sich außerdem auf einen Endwagen eines Schienenfahrzeuges, der zur Durchführung dieser beiden Verfahren ausgebildet ist.

Auftretender Seitenwind stellt für Züge insbesondere bei den genannten hohen Geschwindigkeiten die Gefahr des Entgleisens dar, insbesondere dann, wenn starker Seitenwind von beispielsweise mehr als 20 m/s mit ungünstigen Gleislageverhältnissen (z.B. Kurve, geometrische Lagefehler) zusammentrifft. Es ist ersichtlich, dass das Entgleisungsrisiko zu minimieren ist. In diesem Zusammenhang ist von der DB AG eine neue Richtlinie (Ril 401) ausgegeben worden, durch welche das Gefahrenpotential, das auf Seitenwindbeaufschlagung schneller Reisezüge beruht, verringert werden soll. Diese Richtlinie schreibt vor, dass jedes Fahrzeug zu jeder Zeit an jedem Rad eine Radaufstandskraft von mindestens 10% seiner ruhenden Aufstandskraft aufweisen muss. Ein zugehöriger Fachartikel mit dem Titel "Seitenwindgefahr für schnelle Reisezüge?" ist in EI-Eisenbahningenieur (53) 10/2002, Seite 24, erschienen.

Um der Gefahr eines Entgleisens auf Grund von Seitenwind vorzubeugen, ist es auch möglich, auf eine Ausgestaltung des Fahrwegs Einfluss zu nehmen, in dem beispielsweise Windschutzwände oder Windschutzzäune aufgestellt werden. Auf Seiten des Fahrzeugs kann durch aerodynamische Formgebung und Ballastierung gerade bei dem in der Regel am meisten betroffenen Endwagen, der den Zug anführt, die Aufstandskraft vergrößert werden. Auch die fahrdynamischen Parameter des Fahrwerks, wie Massen, Steifigkeiten, Dämpfer und ihre geometrische Anordnung, beeinflussen die Seitenwindempfindlichkeit des Zuges bzw. Schienenfahrzeugs allgemein. Neben den Maßnahmen an Fahrweg und Schienenfahrzeug wird das Problem der Fahrsicherheit bei Seitenwind bei extremen Starkwind-Verhältnissen durch die betriebliche Maßnahme der Fahrgeschwindigkeitsreduktion beherrscht. In solchen Starkwind-Situationen wird eine reduzierte Maximalgeschwindigkeit, abhängig von einer Windkennkurve (WKK) des Schienenfahrzeugs vorgeschrieben. Voraussetzung dafür sind geeignete Windmessmöglichkeiten und Warnmöglichkeiten mit ausreichender örtlicher Auflösungsschärfe und den daraus erfolgenden manuellen Eingriffen durch eine Fahrdienstleitung.

Ausgehend hiervon liegt der Erfindung die Aufgabe zu Grunde, ein Verfahren anzugeben, mit dem eine erhöhte Entgleisungssicherheit von Schienenfahrzeugen in Fahrt bei auftretendem Seitenwind ermöglicht wird.

Diese Aufgabe wird gelöst durch ein Verfahren zum Erfassen von Seitenwindbelastungen bei einem in Fahrt befindlichen Schienenfahrzeug, mit den Schritten:
a) Erfassen von aerodynamischen Messdaten (z.B. Drücke) an wenigstens einem ersten seitlichen Oberflächenabschnitt des Schienenfahrzeugs,
b) Erfassen einer Geschwindigkeit des Schienenfahrzeugs,
c) Zugreifen auf eine Verweistabelle, welche Zusammenhänge zwischen in Schritt a) erfassbaren aerodynamischen Messdaten des in Fahrt befindlichen Schienenfahrzeugs und der zugehörigen Anströmrichtung des in Fahrt befindlichen Schienenfahrzeugs enthält,
d) Berechnen von Betrag und Richtung des herrschenden Seitenwinds aufgrund der Messdaten aus Schritt a), der Fahrzeuggeschwindigkeit aus Schritt b) und der Verweistabelle, auf die in Schritt c) zugegriffen wird,
e) Erfassen des Gleisstreckenabschnitts innerhalb dessen die Messung aus Schritt a) durchgeführt wird, und
f) Speichern der in Schritt d) berechneten Seitenwinddaten in Zuordnung zu dem in Schritt e) erfassten Gleisstreckenabschnitt als Orts-Koordinate.

Dieses Verfahren gestattet es, für den Abschnitt der Gleisstrecke, an dem die Messungen von Seitenwinddaten am in Fahrt befindlichen Schienenfahrzeug vorgenommen werden, Aussagen über aktuelle Seitenwindverhältnisse zu treffen, und Prognosen über Seitenwindverhältnisse auf unmittelbar folgend befahrenen Gleisstreckenabschnitten zu machen. Die verschiedenen Verfahrensschritte gestatten es insgesamt, Werte für einen jeweils aktuellen Seitenwind zu gewinnen und in Kombination mit einer Ortsinformation und vorzugsweise auch einer Zeitinformation (Datum und Uhrzeit) zu speichern und bei prognostizierter Gefährdung durch Seitenwind Geschwindigkeitsreduktionen zu veranlassen. In einem besonders einfachen Fall wird dieses Verfahren beispielsweise nur an solchen Stellen der Gleisstrecke durchgeführt, für die vorab bekannt ist, dass mit erhöhten Seitenwindbelastungen zu rechnen ist. Selbstverständlich lässt sich dieses Verfahren bei wiederholter Durchfahrt der Gleisstrecke erneut durchführen, und zwar dann für dieselben Gleisstreckenabschnitte, für die bereits früher Seitenwinddaten ermittelt worden sind. Dies gestattet beispielsweise eine gesicherte statistische Behandlung für Seitenwind-Messwerte über eine Vielzahl von Durchfahrten der Gleisstrecke.

Selbstverständlich ist es günstig, wenn in Schritt a) zusätzliche Messdaten für wenigstens einen, dem ersten seitlichen Oberflächenabschnitt im wesentlichen gegenüberliegenden zweiten seitlichen Oberflächenabschnitt des Schienenfahrzeuges erfasst werden.

Selbstverständlich ist es ebenfalls günstig, wenn in Schritt a) zusätzliche Messdaten auf einem im Wesentlichen gegenüber liegenden zweiten seitlichen Oberflächenabschnitt und an einer im Wesentlichen auf der Längsmittellinie liegenden Messstelle eines Schienenfahrzeugkopfes erfasst werden. Wenn beispielsweise zur Durchführung des Verfahrens an jeder Seite und in der Mitte eines Schienenfahrzeugs, insbesondere eines Kopfabschnitts seines Endwagens, aerodynamische Sensoren vorgesehen sind, können Messwerte von allen Sensoren erfasst werden, um Aussagen über Seitenwindbelastungen zu erhalten.

Für den Fall, dass bereits Informationen darüber vorliegen, ab welchem Wert ein Gefahrenpotential von Seitenwindbelastungen ausgeht (z.B. in Form der Windkennkurve eines Schienenfahrzeugs), kann in dem Schritt f) der in Schritt d) berechnete Seitenwinddruck zur Begrenzung der Datenmenge nur bei Überschreiten eines vorgegebenen Schwellwertes gespeichert werden, ab dem Gefahr für ein Schienenfahrzeug entstehen kann.

Das Verfahren kann hinsichtlich seiner Schritte a) bis f) zur Gewinnung eines Seitenwind-Profils für eine bestimmte Gleisstrecke während einer Durchfahrt derselben wiederholt durchgeführt werden. Bei entsprechender Ortsauflösung für die Durchführung des Verfahrens wird ein entsprechend feines Seitenwind-Profil gewonnen, das repräsentativ für Seitenwindbelastungen der entsprechenden Gleisstrecke ist.

Die oben genannte Aufgabe wird außerdem gelöst durch ein Verfahren zum Berücksichtigen von Seitenwindverhältnissen bei einem in Fahrt befindlichen Schienenfahrzeug, Wie in Anspruch 7 definient.

Zur Durchführung dieses Verfahrens wird mit auf das oben beschriebene Verfahren zum Erfassen von Seitenwindbelastungen und dessen Ausführungsformen zurückgegriffen, bei dem ein streckenabhängiges Seitenwind-Profil gewonnen wird. Für das Prognostizieren der Seitenwindverhältnisse nach dem Schritt B) eignen sich vor allem folgende Schritte:
g) Prognostizieren der Seitenwindverhältnisse auf einem unmittelbar vor dem Schienenfahrzeug liegenden Streckenabschnitt,
h) Ermittlung der bezüglich Seitenwindverhältnisse maximal zulässigen Fahrgeschwindigkeit auf dem unmittelbar vor dem Schienenfahrzeug liegenden Streckenabschnitt durch Zugriff auf eine Zuordnungstabelle, welche für die Fahrzeugbaureihe spezifische Daten enthält,
i) Weiterleitung der bezüglich der prognostizierten Seitenwindverhältnisse maximal zulässigen Fahrgeschwindigkeit an die den Zug führende Person oder Personen bzw. technische Einrichtungen, beispielsweise die Zugsteuerung.

Die in Schritt g) erfolgende Prognose der Seitenwindverhältnisse für eine voraus liegende Gleisstrecke kann unmittelbar auf dem aktuellen Stand eines aufgenommenen Seitenwind-Profils für die zurückliegende Gleisstrecke erstellt werden. Selbstverständlich können frühere, für dieselbe und die voraus liegende Gleisstrecke aufgenommene Seitenwind-Profile in die Prognose des Schrittes g) eingehen.

Zur Verbesserung des Prognoseergebnisses für den Schritt g) können in die Prognose auch Messergebnisse von ortsfesten Windmesseinrichtungen in der Nähe der Gleisstrecke eingehen. Allgemein ist es von Vorteil, jedwede Informationen aus dem Seitenwind-Profil, das gerade aktuell gemessen worden ist, oder auch früherer Seitenwindprofile im Hinblick auf Seitenwindbelastungen entlang der Gleisstrecke für die Prognose auszuwerten.

Die Prognose der Seitenwindverhältnisse in Schritt g) kann mit Hilfe eines rechnerischen Korrelationsverfahrens erfolgen, das die Korrelation zwischen den aktuellen und den in der Vergangenheit erfassten Messdaten der zurückgelegten Strecke nutzt, um eine Vorhersage über die Windverhältnisse auf der unmittelbar vor dem fahrenden Schienenfahrzeug liegenden Strecke mittels der dazugehörenden Messdaten aus der Vergangenheit zu machen.

Die für die Seitenwind-Prognose im Schritt g) erforderlichen Daten können im Zug oder zentral gesammelt und gespeichert werden. Zum zentralen Sammeln der für Schritt g) erforderlichen Daten ist es von Vorteil, diese einem ortsfesten Zentralrechner, der beispielsweise der Streckenzentrale zugeordnet sein kann, mitzuteilen. Hier können allgemeine Informationen über Seitenwindverhältnisse von Gleisstrecken gesammelt und ggf. in Beziehung zueinander gesetzt werden. Ein Zugriff auf die Daten des ortsfesten Zentralrechners ermöglicht dann eine weitere Verbesserung eines Ergebnisses der Prognose des Schrittes g).

Im Schritt h) wird aus der im Schritt g) erstellten Seitenwindprognose mittels einer Zuordnungstabelle aus prognostizierten Seitenwindverhältnissen, die beispielsweise durch die Seitenwindgeschwindigkeit beschrieben werden, eine maximal zulässige Fahrgeschwindigkeit ermittelt. Dieser Zusammenhang zwischen Seitenwindverhältnissen und hinsichtlich des Seitenwinds maximal zulässiger Fahrgeschwindigkeit ist spezifisch für eine Fahrzeugbaureihe.

Im Schritt i) kann die im Schritt h) ermittelte maximal zulässige Fahrgeschwindigkeit dem Lok- oder Triebfahrzeugführer selbst oder dem relevanten Personal der Streckenzentralen oder einer technischen Einrichtung der Zugsteuerung zugeführt werden. Entsprechende Arbeitsanweisungen bzw. in eine technische Einrichtung implementierte Abläufe regeln daraus abgeleitete Handlungen bzw. Stellsignale.

Es wird ebenfalls als vorteilhaft angesehen, wenn in Schritt g) von mindestens einem weiteren Schienenfahrzeug, das insbesondere auf der gleichen Strecke in gleicher Richtung voraus oder auf der gleichen Strecke in Gegenrichtung fährt, ermittelte Windmessdaten bei der Prognose berücksichtigt werden. In diesem Fall ist es möglich, im wesentlichen in Echtzeit Messdaten über Seitenwind für die unmittelbar voraus liegende Gleisstrecke zu gewinnen. In diesem Fall ergibt sich eine besonders verlässliche Prognose für die Seitenwindverhältnisse, die das Schienenfahrzeug in Kürze erfahren wird.

Neben dem aktuell gewonnenen Seitenwind-Profil oder auch früher ermittelten Seitenwind-Profilen für die betreffende Baureihe des Schienenfahrzeugs und eine bestimmte Gleisstrecke können in Schritt g) weitere Funktionen berücksichtigt werden. Diese sind bevorzugt aus der Gruppe ausgewählt, die einen Plausibilitätscheck zwischen den Daten der beiden Schienenfahrzeuge, eine Datenredundanz und eine Abfrage zusätzlicher Winddaten von vorbestimmten Punkten der Gleisstrecke umfasst. Diese Funktionen sind teilweise auf die Ausführungsform der Erfindung beschränkt, bei der aktuell von einem weiteren Schienenfahrzeug Messdaten gesammelt werden.

Die Schritte g) bis i) oder Teile von ihnen oder die weiteren Funktionen können in einem ortsfesten Zentralrechner realisiert werden, der über Kommunikationsverbindungen zu den Schienenfahrzeugen verfügt. Es ist jedoch ebenfalls möglich, dass die Funktionen unmittelbar auf einem der beteiligten Schienenfahrzeuge verwirklicht sind und lediglich eine direkte Kommunikationsverbindung zwischen den Schienenfahrzeugen erforderlich sein muss.

Im Zuge der Weiterentwicklung des Verfahrens besteht der nächste Schritt nach der Erstellung der Prognose gemäß Schritt B) darin, in einem Schritt C) das Ergebnis des Schrittes B) hinsichtlich der Prognose der Seitenwindverhältnisse in einen Eingriff in eine Geschwindigkeitssteuerung des Schienenfahrzeugs umzusetzen. Dies bedeutet nichts anderes, dass in die Zugsteuerung eingegriffen werden kann, sofern die prognostizierten Seitenwindverhältnisse dies erfordern. Dabei kann der Eingriff in die Zusteuerung manuell erfolgen, wobei ein Prognoseergebnis beispielsweise einer Bedienungsperson visualisiert wird, die daraufhin den Eingriff in die Zugsteuerung vornimmt. Es ist jedoch ebenfalls möglich, dass das Prognoseergebnis in ein geeignetes Steuersignal umgeformt wird, welches dann automatisch in die Zugsteuerung eingehen kann.

Die oben angegebene Aufgabe wird ebenso gelöst durch einen Endwagen eines Schienenfahrzeugs mit
einer Erfassungseinrichtung für Seitenwind-Messdaten an wenigstens einem erstem seitlichen Oberflächenabschnitt des Endwagens,
einer Erfassungseinrichtung für eine Geschwindigkeit des Schienenfahrzeugs und
einer Messdatenerfassungs- und -verarbeitungseinrichtung zum Zugreifen auf eine Verweistabelle, welche Zusammenhänge zwischen erfassbaren Seitenwind-Messdaten und zugehörigen absoluten Seitenwinddrücken enthält, und zum Berechnen von Betrag und Richtung des Seitenwinds an dem Oberflächenabschnitt aufgrund der Seitenwind-Messdaten, der Geschwindigkeit des Schienfahrzeugs und der Verweistabelle.

Weiterentwicklungen dieses Endwagens finden sich in den abhängigen Patentansprüchen 20 bis 26 und betreffen in erster Linie technische Ausstattungselemente, wie aerodynamische Sensoren, welche die Durchführung der Verfahrensschritte, wie vorstehend erläutert, gestatten.

Ausführungsbeispiele der Erfindung werden nachfolgend anhand der Zeichnung näher erläutert. Es zeigen:
- Figur 1: eine Blockdiagrammdarstellung eines Systems zum Berücksichtigen von Seitenwindbelastungen bei der Steuerung eines Schienenfahrzeugs,
- Figur 2: eine Blockdiagrammdarstellung eines Systems zum Berücksichtigen von Seitenwindbelastungen bei einem Schienenfahrzeug in einer zweiten Ausführungsform, bei der Seitenwind-Messdaten von einem weiteren Schienenfahrzeug empfangen werden und
- Figur 3: eine Blockdiagrammdarstellung eines Systems zum Berücksichtigen von Seitenwindbelastungen eines Schienenfahrzeugs gemäß einer dritten Ausführungsform, bei dem auf Daten eines ortsfesten Zentralrechners einer Streckenzentrale zurückgegriffen wird.

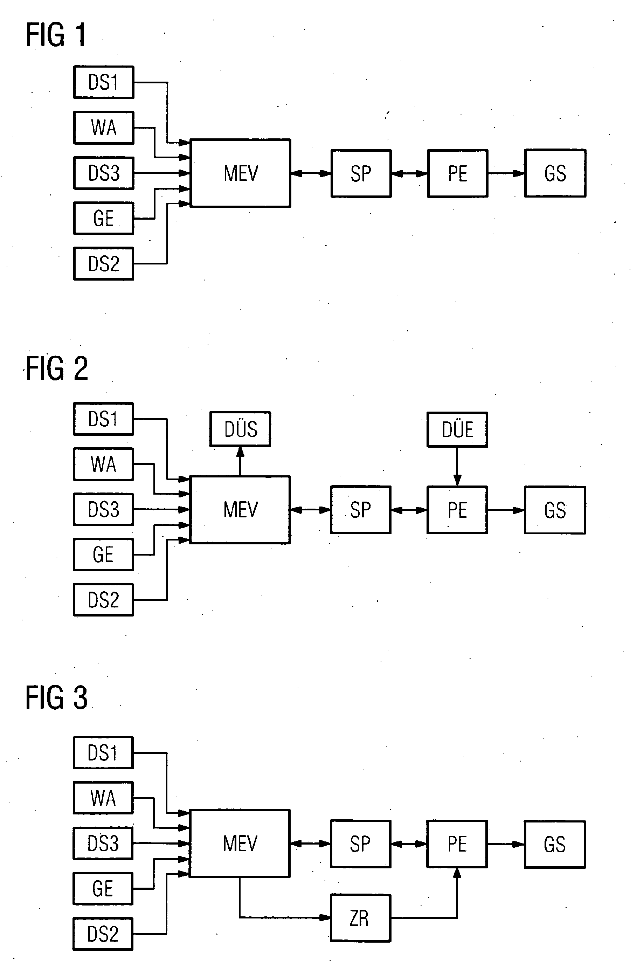

Die Blockdiagrammdarstellung von Figur 1 eines Systems zum Berücksichtigen von Seitenwindbelastungen eines Schienenfahrzeugs zeigt auf der linken Seite eine Anzahl Messwertgeber, nämlich drei aerodynamische Drucksensoren DS1, DS2, DS 3, eine Erfassungseinrichtung GE für eine Geschwindigkeit des Schienenfahrzeugs sowie einen den Gleisstreckenabschnitt, beispielsweise in Form des Streckenkilometers, erfassenden Wegaufnehmer WA. Die aerodynamischen Sensoren DS1, DS2, DS3 liefern Daten, deren Werte zusammen mit den Werten der Erfassungseinrichtung GE und des Wegaufnehmers WA an eine Messdatenerfassungs- und -verarbeitungseinrichtung MEV weitergegeben werden. Die aerodynamischen Drucksensoren DS1, DS2, DS3 sind günstiger Weise im Kopfbereich eines Endwagens oder eines Schienenfahrzeugs angebracht, und zwar DS1 und DS2 auf dessen gegenüberliegenden Seiten sowie DS3 frontseitig in Nähe des Staupunkts des angeströmten Endwagens bzw. Schienenfahrzeugs. Die Messdatenerfassungs- und -verarbeitungseinrichtung MEV berechnet den herrschenden Seitenwind und insbesondere die herrschende Seitenwindgeschwindigkeit aus den Messdaten der Erfassungseinrichtung GE für eine Geschwindigkeit des Schienenfahrzeugs, aus den Messwerten der Drucksensoren DS1, DS2, DS3 und greift dafür auf eine Verweistabelle zu, in der die Messwerte der Drucksensoren DS1, DS2, DS3 dem Anströmungswinkel zugeordnet sind. Eine solche Verweistabelle lässt sich beispielsweise vorab im Rahmen von Computersimulationsrechnungen, Versuchen im Windkanal oder im Fahrbetrieb aufstellen. Die Verweistabelle kann auch in Form eines mehrdimensionalen Kennfeldes vorliegen.

Aufgrund der ermittelten Seitenwinddaten und eines zugehörigen Streckenkilometerwerts und eines zugehörigen Datumsstempels erfolgt mit Hilfe der Messdatenerfassungs- und -verarbeitungseinrichtung MEV ein Eintrag in einen Speicher SP, in dem fortlaufend Seitenwinddaten in Zuordnung zu Streckenkilometern als Ortskoordinaten gesammelt werden. Auf diese Weise "lernt" die in Figur 1 dargestellte Anordnung die Seitenwindverhältnisse beim Durchfahren einer vorbestimmten Gleisstrecke.

Eine Prognoseeinrichtung PE zum Prognostizieren der Seitenwindverhältnisse für eine gerade voraus liegende Gleisstrecke von beispielsweise einigen Kilometern greift auf die Daten in dem Speicher SP zu und analysiert diese.
Beispielsweise kann eine Korrelation zwischen den Seitenwinddaten der soeben zurückgelegten Streckenkilometer mit älteren Seitenwinddaten desselben Streckenabschnitts für die voraus liegenden Streckenkilometer eine Prognose liefern. Für diesen Zweck können in dem Speicher SP nicht nur die aktuell gewonnen Seitenwindmessdaten sondern auch für dieselbe Gleisstrecke früher gewonnene Seitenwind-Profile herangezogen werden. Gerade die früher gewonnenen Seitenwind-Profile können vorab auf stark seitenwind-gefährdete Abschnitte auf der Gleisstrecke oder hinsichtlich andere Aspekte analysiert worden sein, so dass die Ergebnisse solcher Analysen von der Prognoseeinrichtung PE berücksichtigt werden können.

Ein Ausgangssignal der Prognoseeinrichtung PE gibt dann für einen kommenden Gleisstreckenabschnitt zu erwartende Seitenwindbelastungen an und wird einer Geschwindigkeitssteuerung GS des Schienenfahrzeugs zugeleitet. Diese Geschwindigkeitssteuerung GS kann in einfacher Weise Warnsignale ausgeben, wenn Gefährdung bedeutende Seitenwinddruckbelastungen zu erwarten sind oder aber automatisch in eine Geschwindigkeitssteuerung des Schienenfahrzeugs selbst eingreifen. Ein solcher automatischer Eingriff kann in einer automatischen Höchstgeschwindigkeitsbegrenzung des Schienenfahrzeugs bestehen. Die Geschwindigkeitssteuerung GS kann sich in der Streckenzentrale befinden und über eine Kommunikationsverbindung gegebenenfalls die Höchstgeschwindigkeit des entsprechenden Schienenfahrzeugs beeinflussen.

Die Ausführungsform einer Anordnung zum Berücksichtigen von Seitenwindbelastungen bei einem in Fahrt befindlichen Schienenfahrzeug nach Figur 2 unterscheidet sich in einem Punkt von derjenigen, die anhand der Figur 1 erläutert worden ist. Die Prognoseeinrichtung PE ist mit einem Datenübertragungsempfänger DÜE verbunden. Hierüber empfängt das hier betrachtete Schienenfahrzeug Daten von einem weiteren Schienenfahrzeug, das sich vor dem hier betrachteten Schienenfahrzeug auf derselben Gleisstrecke befindet und in gleicher oder entgegen gesetzter Richtung fährt. Dieses weitere Schienenfahrzeug ist mit ähnlichen Messdatengebern wie den oben erläuterten und ebenfalls mit einer Messdatenerfassungs- und -verarbeitungseinrichtung MEV ausgestattet. Aktuell ermittelte Datenpakete aus Seitenwinddaten, Streckenkilometerangaben und Zeitstempel, die von dem weiteren Schienenfahrzeug stammen, werden von dem Datenübertragungsempfänger DÜE an die Prognoseeinrichtung PE weitergeleitet, welche diese Messdaten in die Prognose einbezieht, die für die voraus liegenden Streckenkilometer des Schienenfahrzeugs maßgeblich sein soll. Das Schienenfahrzeug selbst kann mit einem Datenübertragungssender DÜS verbunden ausgestattet sein, wie es in der Figur 2 dargestellt ist, so dass das hier betrachtete Schienenfahrzeug auch als weiteres Schienenfahrzeug, das Messdaten sendet, fungieren kann. Die Datenübertragung zwischen den Schienenfahrzeugen kann unter Nutzung bestehender Kommunikationsmedien erfolgen.

Die Anordnung nach Figur 3 hat gegenüber der Anordnung nach Figur 1 die Besonderheit, dass eine Datenkommunikation mit einem ortsfesten Zentralrechner ZR einer Streckenleitzentrale stattfindet. Typischerweise wird wiederum eine bestehendes und sicheres Kommunikationsmedium gewählt sein, um eine Datenkommunikation zwischen dem Schienenfahrzeug einerseits und dem ortsfesten Zentralrechner ZR andererseits zu ermöglichen, wobei in Figur 3 jedoch auf die Darstellung der zugehörigen Sende-/Empfangsgeräte verzichtet worden ist. Die zuggestützte Messdatenerfassungs- und - verarbeitungseinrichtung MEV sendet ihre Datenpakete aus Seitenwinddaten, Streckenkilometerangaben und Zeitstempel an den ortsfesten Zentralrechner ZR, so dass an dieser Stelle Seitenwindprofile für die durchfahrene Gleisstrecke gewonnen werden. Eine Analyse auf stark seitenwind-gefährdete Abschnitte oder ähnliches findet ebenfalls an dem ortsfesten Zentralrechner ZR statt. Analyseergebnisse werden von dem ortsfesten Zentralrechner ZR an die Prognoseeinrichtung PE übertragen. Darüber hinaus liegen an dem ortfesten Zentralrechner ZR ergänzende Informationen vor, beispielsweise zusätzliche Winddaten von ausgewählten, repräsentativen oder exponierten Streckenpunkten der Gleisstrecke oder Informationen eines oder mehrerer qualifizierter Wetterdienste. Wird die Ausführungsform nach Figur 3 mit derjenigen nach Figur 2 kombiniert, d. h. weitere Seitenwindmessdaten werden von einem weiteren Schienenfahrzeug bereitgestellt, kann an dem ortsfesten Zentralrechner ZR auch beispielsweise ein Plausibilitätscheck oder ein Redundanzcheck vorgenommen werden. Auf diese Weise wird untersucht, ob die von den beiden beteiligten Schienenfahrzeugen stammenden Seitenwinddaten nach Betrag und Richtung zueinander passen.

Die durch die Erfindung erzielbaren wesentlichen Vorteile sind nachstehend kurz zusammengefasst:
Das Schienenfahrzeug kann auch bei Auftreten von starkem Seitenwind sicher betrieben werden. Dabei wird eine für die Sicherheit erforderliche Reduktion der Geschwindigkeit grundsätzlich minimiert, d.h., die Höchstgeschwindigkeit wird nur im Falle prognostizierten gefährdenden Seitenwinds gesenkt. Dies kann vollkommen unabhängig von einem Wetterdienst geschehen durch signalisierte manuelle Eingriffe oder bevorzugt automatisch durch die Zugsteuerung. Eine für den Betreiber und speziell für die Fahrgäste erfreuliche Folge ist eine erhöhte Pünktlichkeit des Schienenfahrzeugs. Im übrigen ist es für den Betreiber des Schienenfahrzeugs günstig, dass hinsichtlich Erstellung und Instandhaltung kostspielige streckenbauliche Maßnahmen (z.B. Windschutzwände) ebenso entfallen können wie fahrzeugseitige Maßnahmen (z.B. eine Maximierung der Radaufstandskraft im führenden Drehgestell des Endwagens durch Ballast).

## Patentansprüche

1. Verfahren zum Erfassen von Seitenwindbelastungen bei einem in Fahrt befindlichen Schienenfahrzeug, mit den Schritten:
a) Erfassen von aerodynamischen Messdaten an wenigstens einem ersten seitlichen Oberflächenabschnitt des Schienenfahrzeugs,
b) Erfassen einer Geschwindigkeit des Schienenfahrzeugs,
c) Zugreifen auf eine Verweistabelle, welche Zusammenhänge zwischen in Schritt a) erfassbaren aerodynamischen Messdaten des in Fahrt befindlichen Schienenfahrzeugs und der zugehörigen Anströmrichtung des in Fahrt befindlichen Schienenfahrzeug enthält,
d) Berechnen von Betrag und Richtung des herrschenden Seitenwinds aufgrund der Messdaten aus Schritt a), der Fahrzeuggeschwindigkeit aus Schritt b) und der Verweistabelle, auf die in Schritt c) zugegriffen wird,
e) Erfassen des Gleisstreckenabschnitts innerhalb dessen die Messung aus Schritt a) durchgeführt wird, und
f) Speichern der in Schritt d) berechneten Seitenwinddaten in Zuordnung zu dem in Schritt e) erfassten Gleisstreckenabschnitt als Orts-Koordinate.

2. Verfahren nach Anspruch 1, bei dem
in Schritt a) zusätzliche aerodynamische Messdaten für wenigstens einen, dem ersten seitlichen Oberflächenabschnitt im wesentlichen gegenüberliegenden zweiten seitlichen Oberflächenabschnitt des Schienenfahrzeugs erfasst werden.

3. Verfahren nach Anspruch 1 oder 2, bei dem
in Schritt a) zusätzliche aerodynamische Messdaten an einer im wesentlichen auf der Fahrzeug-Längsmittellinie liegenden Messstelle des Schienenfahrzeugkopfes erfasst werden.

4. Verfahren nach einem der Ansprüche 1 bis 3, bei dem in Schritt f) der in Schritt d) berechnete Seitenwinddruck nur bei Überschreiten eines vorgegebenen Schwellwerts gespeichert wird.

5. Verfahren nach einem der Ansprüche 1 bis 4, bei dem die Schritte a) bis e) zur Gewinnung eines Seitenwind-Profils für eine bestimmte Gleisstrecke während einer Durchfahrt derselben wiederholt durchgeführt werden.

6. Verfahren nach einem der Ansprüche 1 bis 5, bei dem in Schritt f) die in Schritt d) berechneten Seitenwinddaten in Zuordnung zu dem in Schritt e) erfassten Gleisstreckenabschnitt als Orts-Koordinate und versehen mit dem zugehörigen zeitstempel, Datum und Uhrzeit, gespeichert werden.

7. Verfahren zum Berücksichtigen von Seitenwindverhältnissen bei einem in Fahrt befindlichen Schienenfahrzeug, mit den Schritten:
A) Durchführen eines Verfahrens nach einem der Ansprüche 1 bis 6 zum Gewinnen eines Seitenwind-Profils für eine bestimmte Gleisstrecke während einer Durchfahrt derselben,
B) Prognostizieren der Seitenwindverhältnisse für eine voraus liegende Gleisstrecke aufgrund des in Schritt A) gewonnenen Seitenwind-Profils.

8. Verfahren nach Anspruch 7, bei dem Schritt B) ergänzt wird durch:
g) Prognostizieren der Seitenwindverhältnisse auf einem unmittelbar vor dem Schienenfahrzeug liegenden Streckenabschnitt,
h) Ermittlung der bezüglich Seitenwindverhältnisse maximal zulässigen Fahrgeschwindigkeit auf dem unmittelbar vor dem Schienenfahrzeug liegenden Streckenabschnitt durch Zugriff auf eine Zuordnungstabelle, welche für die Fahrzeugbaureihe spezifische Daten enthält,
i) Weiterleitung der bezüglich der prognostizierten Seitenwindverhältnisse maximal zulässigen Fahrgeschwindigkeit an die den Zug führende Person oder Personen bzw. technische Einrichtungen, beispielsweise die Zugsteuerung.

9. Verfahren nach Anspruch 8, bei dem
in Schritt g) die Prognose durch Messergebnisse von ortsfesten Windmesseinrichtungen verbessert wird.

10. Verfahren nach Anspruch 8 oder 9, bei dem
in Schritt g) die Prognose der Seitenwindverhältnisse mit Hilfe eines rechnerischen Korrelationsverfahrens erfolgt.

11. Verfahren nach einem der Ansprüche 7 bis 10, bei dem die Ergebnisse der in Schritt B) vorgenommenen Analyse des Seitenwind-Profils einem ortsfesten Zentralrechner einer Streckenzentrale mitgeteilt werden.

12. Verfahren nach einem der Ansprüche 8 bis 11, bei dem
in Schritt g) von mindestens einem weiteren Schienenfahrzeug empfangene Messdaten über Seitenwinddaten bei der Prognose berücksichtigt werden.

13. Verfahren nach Anspruch 12, bei dem
das mindestens eine weitere Schienenfahrzeug sich auf derselben Gleisstrecke auf das Schienenfahrzeug zu bewegt oder dem Schienenfahrzeug voraus fährt.

14. Verfahren nach Anspruch 12 oder 13, bei dem
in Schritt g) weitere Funktionen berücksichtigt werden, die aus der Gruppe ausgewählt sind, die einen Plausibilitätscheck zwischen den Daten der beiden Schienenfahrzeuge, Datenredundanz und die Abfrage zusätzlicher Winddaten von vorbestimmten Punkten der Gleisstrecke umfasst.

15. Verfahren nach Anspruch 14, bei dem
die Funktionen in einem ortfesten Zentralrechner realisiert werden, der über Kommunikationsverbindungen zu den Schienenfahrzeugen verfügt.

16. Verfahren nach einem der Ansprüche 7 bis 15, bei dem
in einem Schritt C) das Ergebnis des Schrittes B) hinsichtlich der Prognose der Seitenwindverhältnisse in einen Eingriff in die Geschwindigkeitssteuerung des Schienenfahrzeugs umgesetzt wird.

17. Verfahren nach Anspruch 16, bei dem
der Eingriff in die Zugsteuerung manuell erfolgt.

18. Verfahren nach Anspruch 16, bei dem
der Eingriff in die Zugsteuerung automatisch erfolgt.

19. Endwagen eines Schienenfahrzeugs mit
einer Erfassungseinrichtung (DS1, DS2, DS3) für Seitenwind-Messdaten an wenigstens einem erstem seitlichen Oberflächenabschnitt des Endwagens,
einer Erfassungseinrichtung (GE) für eine Geschwindigkeit des Schienenfahrzeugs und
einer Messdatenerfassungs- und -verarbeitungseinrichtung (MEV) zum Zugreifen auf eine Verweistabelle, welche Zusammenhänge zwischen erfassbaren Seitenwind-Messdaten und des zugehörigen Seitenwinds enthält, und zum Berechnen von Betrag und Richtung des Seitenwinddrucks aufgrund der Seitenwind-Messdaten, der Geschwindigkeit des Schienfahrzeugs und der Verweistabelle.

20. Endwagen nach Anspruch 19, **dadurch gekennzeichnet, dass** die Erfassungseinrichtung (DS1, DS2, DS3) von Seitenwind-Messdaten zum Erfassen dieser Messdaten an wenigstens einem zweiten, dem ersten seitlichen Oberflächenabschnitt im Wesentlichen gegenüberliegenden zweiten seitlichen Oberflächenabschnitt des Endwagens ausgebildet ist.

21. Endwagen nach Anspruch 20, **dadurch gekennzeichnet, dass** die Erfassungseinrichtung (DS1, DS2, DS3) von Seitenwind-Messdaten zum Erfassen dieser Messdaten zusätzlichen an einer im wesentlichen auf der Fahrzeug-Längsmittellinie liegenden Messstelle des Schienenfahrzeugkopfes ausgebildet ist.

22. Endwagen nach einem der Ansprüche 19 bis 21, **dadurch gekennzeichnet,**
**dass** die Erfassungseinrichtung (DS1, DS2, DS3) für Seitenwind-Messdaten in einem Kopfbereich des Endwagens angeordnet ist und an jeder Seite und in der Längsmittellinie dieses Kopfbereiches einen aerodynamischen Sensor aufweist.

23. Endwagen nach einem der Ansprüche 19 bis 22, **dadurch gekennzeichnet,**
**dass** die Messdatenerfassungs- und - verarbeitungseinrichtung (MEV) zum Ablegen der berechneten absoluten Seitenwinddaten in Zuordnung zu vorgegebenen Gleisstreckenabschnitten als OrtsKoordinaten und in Zuordnung zu Datums- und Zeitdaten in einem Speicher (SP) ausgebildet ist.

24. Endwagen nach einem der Ansprüche 19 bis 23, **dadurch gekennzeichnet,**
**dass** die Messdatenerfassungs- und - verarbeitungseinrichtung (MEV) zum Umsetzen eines gespeicherten Seitenwinds in ein ihn wiedergebendes elektrisches Signal und zum Übermitteln des elektrischen Signals an ein weiteres Schienenfahrzeug zur Weiterverarbeitung ausgebildet ist.

25. Endwagen nach Anspruch 24, **dadurch gekennzeichnet,**
**dass** er eine Prognoseeinrichtung (PE) zum Prognostizieren von Seitenwindbelastungen in einem voraus liegenden Gleisstreckenabschnitt.aufweist, die auf in dem Speicher (SP) abgelegte Seitenwind-Profile zugreift.

26. Endwagen nach Anspruch 25, **dadurch gekennzeichnet, dass** die Prognoseeinrichtung (PE) ein Signal, das eine Prognose für Seitenwindbelastungen in dem voraus liegenden Gleisstreckenabschnitt wiedergibt, bereitstellt, und eine Geschwindigkeitssteuerung (GS) vorgesehen ist, die ausgehend von dem Signal der Prognoseeinrichtung (PE) eine Geschwindigkeit des Schienenfahrzeugs unter Berücksichtigung prognostizierter Seitenwindbelastungen ansteuert.

## Claims

1. Method for recording of crosswind loads on a traveling rail vehicle, having the following steps:
a) recording of aerodynamic measurement data on at least one first side surface section of the rail vehicle,
b) recording of the speed of the rail vehicle,
c) access to a reference table which contains relationships between aerodynamic measurement data, which can be detected in step a), of the traveling rail vehicle and of the associated incidence direction of the traveling rail vehicle,
d) calculation of the magnitude and direction of the prevailing crosswind on the basis of the measurement data from step a), the vehicle speed from step b), and the reference table which is accessed in step c),
e) recording of the track line section within which the measurement from step a) is carried out, and
f) storage of the crosswind data calculated in step d), associated with the track line section recorded in step e), as position coordinates.

2. Method according to Claim 1, in which
in step a), additional aerodynamic measurement data is recorded for at least one second side surface section of the rail vehicle which is essentially opposite the first side surface section.

3. Method according to Claim 1 or 2, in which
in step a), additional aerodynamic measurement data are recorded at a measurement point, which is located essentially on the vehicle longitudinal center line, of the rail vehicle head.

4. Method according to one of Claims 1 to 3, in which
in step f), the crosswind pressure calculated in step d) is stored only if a predetermined threshold value is exceeded.

5. Method according to one of Claims 1 to 4, in which steps a) to e) are carried out repeatedly during a journey on a specific track section in order to obtain a crosswind profile for that specific track section.

6. Method according to one of Claims 1 to 5, in which in step f), the crosswind data calculated in step d) is stored, associated with the track line section recorded in step e), as position coordinates and provided with the associated time stamp, date and time.

7. Method for consideration of crosswind conditions for a traveling rail vehicle, having the following steps:
A) carrying out a method according to one of Claims 1 to 6 to obtain a crosswind profile for a specific track section during a journey on that track section,
B) the crosswind conditions are predicted for a track section lying ahead on the basis of the crosswind profile obtained in step A).

8. Method according to Claim 7, in which step B) is supplemented by:
g) the crosswind conditions are predicted on a track section lying immediately in front of the rail vehicle,
h) the maximum permissible speed of travel relating to the crosswind conditions on the track section lying immediately in front of the rail vehicle is calculated by accessing a look-up table which contains data specific for that range of vehicles,
i) the maximum permissible speed of travel relating to the predicted crosswind conditions is passed on to the person, people or technical devices driving the train, for example the train control system.

9. Method according to Claim 8, in which
in step g), the prediction is improved by measurement results from fixed-position wind measurement devices.

10. Method according to Claim 8 or 9, in which
in step g), the prediction of the crosswind conditions is produced using a computer correlation method.

11. Method according to one Claims 7 to 10, in which,
the results of the analysis of the crosswind profile carried out in step B) are signaled to a stationary central computer in a track section control center.

12. Method according to one of Claims 8 to 11, in which
in step g), measurement data received from at least one further rail vehicle relating to crosswind data is taken into account in the prediction.

13. Method according to Claim 12, in which
the at least one further rail vehicle is traveling towards the rail vehicle on the same track section, or is traveling in front of the rail vehicle.

14. Method according to Claim 12 or 13, in which
in step g), further functions are considered, which are chosen from the group which comprises a plausibility check between the data from the two rail vehicles, data redundancy and the check of additional wind data from predetermined points on the track section.

15. Method according to Claim 14, in which
the functions are provided in a stationary central computer which has communication links to the rail vehicles.

16. Method according to one of Claims 7 to 15, in which
in a step C), the result of step B) relating to the prediction of the crosswind conditions is converted to an action on the speed control system for the rail vehicle.

17. Method according to Claim 16, in which
the action is carried out manually on the train control system.

18. Method according to Claim 16, in which
the action is carried out automatically on the train control system.

19. End car of a rail vehicle having a detection device (DS1, DS2, DS3) for crosswind measurement data on at least one first side surface section of the end car,
a recording device (GE) for the speed of the rail vehicle, and
a measurement data recording and processing device (MEV) for accessing a reference table which contains relationships between recordable crosswind measurement data and the associated crosswind, and for calculation of the magnitude and direction of the crosswind pressure on the basis of the crosswind measurement data, the speed of the rail vehicle and the reference table.

20. End car according to Claim 19, **characterized**
**in that** the recording device (DS1, DS2, DS3) for crosswind measurement data is designed to record this measurement data on at least one second side surface section of the end car, which is essentially opposite the first side surface section.

21. End car according to Claim 20, **characterized in that** the recording device (DS1, DS2, DS3) for crosswind measurement data is designed to record this measurement data in addition at a measurement point which is located essentially on the vehicle longitudinal center line of the rail vehicle head.

22. End car according to one of Claims 19 to 21, **characterized in that** the recording device (DS1, DS2, DS3) for crosswind measurement data is arranged in a head area of the end car, and has an aerodynamic sensor on each side and on the longitudinal center line of the head area.

23. End car according to one of Claims 19 to 22, **characterized in that** the measurement data recording and processing device (MEV) is designed to store the calculated absolute crosswind data associated with predetermined track line sections as position coordinates and associated with date and time data in a memory (SP).

24. End car according to one of Claims 19 to 23, **characterized in that** the measurement data recording and processing device (MEV) is designed to convert a stored crosswind to an electrical signal which reflects it, and to transmit the electrical signal to a further rail vehicle for further processing.

25. End car according to Claim 24, **characterized in that** the end car has a prediction device (PE) for prediction of crosswind loads on a track line section lying ahead, which prediction device (PE) accesses crosswind profiles stored in the memory (SP).

26. End car according to Claim 25, **characterized in that** the prediction device (PE) produces a signal which reflects a prediction of crosswind loads on the track line section lying ahead, and a speed control system (GS) is provided which controls the speed of the rail vehicle, taking into account predicted crosswind loads, on the basis of the signal from the prediction device (PE).

## Revendications

1. Procédé de détection des effets d'un vent latéral sur un véhicule sur rails en déplacement, comprenant les stades dans lesquels
a) on relève des données de mesure aérodynamiques sur au moins une première partie de surface latérale du véhicule sur rails,
b) on relève une vitesse du véhicule sur rails,
c) on accède à une table de renvoi, qui contient des relations entre des données de mesure aérodynamiques pouvant être relevées au stade a) du véhicule sur rails en déplacement et le sens d'avance du véhicule en déplacement,
d) on calcule la valeur et la direction du vent latéral régnant sur la base des données de mesure du stade a), de la vitesse du véhicule du stade b) et de la table de renvoi à laquelle on a accédé au stade c),
e) on relève la section de voie ferrée, dans laquelle on a effectué les mesures du stade a), et
f) on mémorise les données du vent latéral calculées au stade d) en association avec la section de voie ferrée relevée au stade e) comme coordonnées dans l'espace.

2. Procédé suivant la revendication 1, dans lequel au stade a), on relève des données de mesure aérodynamiques supplémentaires, pour au moins une deuxième partie de surface latérale du véhicule sur rails sensiblement opposée à la première partie de surface latérale.

3. Procédé suivant la revendication 1 ou 2, dans lequel au stade a), on relève des données de mesure aérodynamiques supplémentaires en un point de mesure de la tête du véhicule sur rails se trouvant sensiblement sur la ligne médiane longitudinale du véhicule.

4. Procédé suivant l'une des revendications 1 à 3, dans lequel au stade f), on mémorise une pression de vent latéral calculée au stade d), seulement si une valeur de seuil prescrite est dépassée.

5. Procédé suivant l'une des revendications 1 à 4, dans lequel on effectue de manière répétée les stades a) à e), pour l'obtention d'un profil de vent latéral pour une section de voie déterminée pendant qu'elle est parcourue.

6. Procédé suivant l'une des revendications 1 à 5, dans lequel au stade f), on mémorise les données de vent latéral calculées au stade d) en association avec la section de voie ferrée relevée au stade e) comme coordonnées dans l'espace et munies d'un horodatage associé, date et heure.

7. Procédé pour tenir compte des conditions de vent latéral pour un véhicule sur rails en déplacement, comprenant les stades dans lesquels :
A) on effectue un procédé suivant l'une des revendications 1 à 6, pour obtenir un profil de vent latéral pour une section de voie déterminée pendant qu'elle est parcourue,
B) on pronostique les conditions de vent latéral, pour une section de voie en aval sur la base du profil de vent latéral obtenu au stade A).

8. Procédé suivant la revendication 7, dans lequel on complète le stade B) par :
g) le pronostic des conditions du vent latéral sur une section de voie se trouvant juste avant le véhicule sur rails,
h) la détermination de la vitesse maximum de déplacement admissible, rapportée aux conditions de vent latéral sur la section de voie se trouvant juste avant le véhicule sur rails, par accès à une table d'affectation qui contient des données spécifiques à la gamme de fabrication du véhicule,
i) l'envoi de la vitesse de déplacement maximum admissible rapportée aux conditions de vent latéral pronostiquée à la personne conduisant le train ou à des personnes ou à des dispositifs techniques, par exemple à la commande de train.

9. Procédé suivant la revendication 8, dans lequel au stade g), on améliore le pronostic par des résultats de mesure de dispositif à poste fixe de mesure du vent.

10. Procédé suivant la revendication 8 ou 9, dans lequel au stade g), on effectue le pronostic des conditions de vent latéral à l'aide d'un procédé de corrélation par calcul.

11. Procédé suivant l'une des revendications 7 à 10, dans lequel on fait part des résultats de l'analyse du profil de vent latéral effectuée au stade B) à un ordinateur central à poste fixe d'une centrale de voie.

12. Procédé suivant l'une des revendications 8 à 11, dans lequel au stade g), on tient compte dans le premier type de données de mesure du vent latéral reçues par un autre véhicule sur rails.

13. Procédé suivant la revendication 12, dans lequel le au moins un autre véhicule sur rails se déplace sur la même section de voie que le véhicule sur rails ou précède le véhicule sur rails.

14. Procédé suivant la revendication 12 ou 13, dans lequel au stade g), on tient compte d'autres fonctions, qui sont choisies dans le groupe qui comprend un contrôle de plausibilité entre les données des deux véhicules sur rails, une redondance de données et la demande de données de vent supplémentaires de points déterminés à l'avance de la section de voie.

15. Procédé suivant la revendication 14, dans lequel on réalise les fonctions dans un ordinateur central à poste fixe, qui dispose de liaisons de communication avec les véhicules sur rails.

16. Procédé suivant l'une des revendications 7 à 15, dans lequel au stade c), on transpose le résultat du stade B) concernant le pronostic des conditions du vent latéral en une intervention dans la commande de vitesse du véhicule sur rails.

17. Procédé suivant la revendication 16, dans lequel l'intervention dans la commande du train s'effectue manuellement.

18. Procédé suivant la revendication 16, dans lequel l'intervention dans la commande du train s'effectue automatiquement.

19. Voiture de queue d'un véhicule sur rails, comprenant
un dispositif ( DS1, DS2, DS3 ) de détection de données de mesure de vent latéral sur au moins une première partie de surface latérale de la voiture de queue,
un dispositif ( GE ) de détection d'une vitesse du véhicule sur rails et
un dispositif ( MEV ) de détection et de traitement de données de mesure pour accéder à une table de renvoi, qui contient des relations entre des données de mesure de vent latéral pouvant être relevées et la vitesse latérale associée et pour le calcul de la valeur et de la direction de la pression du vent latéral sur la base des données de mesure de vent latéral de la vitesse du véhicule sur rails et de la table de renvoi.

20. Voiture de queue suivant la revendication 19, **caractérisée en ce que** le dispositif ( DS1, DS2, DS3 ) de détection de données de mesure de vent latéral est constitué pour la détection de ces données de mesure sur au moins une deuxième partie de surface latérale de la voiture de queue sensiblement opposée à la première partie de surface latérale.

21. Voiture de queue suivant la revendication 20, **caractérisée en ce que** le dispositif ( DS1, DS2, DS3 ) de détection de données de mesure de vent latéral est constitué pour la détection de ces données de mesure supplémentairement en un point de mesure de la tête du véhicule sur rails se trouvant sensiblement sur la ligne médiane longitudinale du véhicule.

22. Voiture de queue suivant l'une des revendications 19 à 21, **caractérisée**
**en ce que** le dispositif ( DS1, DS2, DS3 ) de détection de données de mesure de vent latéral est disposé dans une partie de tête de la voiture de queue et a un capteur aérodynamique de chaque côté et dans la ligne médiane longitudinale de cette partie de tête.

23. Voiture de queue suivant l'une des revendications 19 à 22, **caractérisée**
**en ce que** le dispositif ( MEV ) de détection et de traitement de données de mesure est constitué pour la mémorisation des données de vent latéral absolues calculées en association à des sections de voie ferrée prescrites comme coordonnées dans l'espace et en association à des données de date et de temps dans une mémoire ( SP ).

24. Voiture de queue suivant l'une des revendications 19 à 23, **caractérisée**
**en ce que** le dispositif ( MEV ) de détection et de traitement de données de mesure est constitué pour la transposition d'un vent latéral mémorisé en un signal électrique le reproduisant et pour la transmission du signal électrique à un autre véhicule sur rails en vue d'être traité davantage.

25. Voiture de queue suivant la revendication 24, **caractérisée en ce qu'**elle a un dispositif ( PE ) de pronostic pour pronostiquer des effets du vent latéral dans une section de voie ferrée en aval, dispositif qui accède à des profils de vent latéral mémorisés dans la mémoire ( SP ).

26. Voiture de queue suivant la revendication 25, **caractérisée en ce que** le dispositif ( PE ) de pronostic met à disposition un signal, qui reproduit un pronostic des effets de vent latéral dans la section de voie ferrée en aval et il est prévu une commande ( GS ) de vitesse, qui, à partir du signal du dispositif ( PE ) de pronostic, commande une vitesse du véhicule sur rails en tenant compte des effets de vent latéral pronostiqués.
